# DEMANDE DE BREVET EUROPEEN

(11) **EP 1 533 147 A2**
(43) Date de publication de la demande: **25.05.2005**
(21) Numéro de dépôt: 04292636.0
(22) Date de dépôt: 08.11.2004
(51) Int. Cl.: B60C 23/04

(54) **Système et procédé de détermination d'au moins un paramêtre et d'au moins un organe tournant au moyen d'un signal de position**

(30) Priorité: 21.11.2003 FR 0350881
(71) Demandeur: S.N.R. ROULEMENTS, 74010 Annecy Cédex (FR)
(72) Inventeur: Nicot, Christophe, 74600 Quintal (FR); Duret, Christophe, 74600 Quintal (FR)
(74) Mandataire: Geismar, Thierry

(57) **Abrégé**

L'invention concerne un système de détermination d'au moins un paramètre d'au moins un organe tournant (1) par rapport à une structure fixe (2), comprenant, pour chaque organe tournant (1), un ensemble comprenant un transpondeur (3), un codeur (5), un capteur (6) de position, un dispositif de détection (4) du ou des paramètre(s) issu(s) du transpondeur (3) ; ledit système comprenant en outre une unité de synchronisation (7) qui est connectée à chaque capteur (6) et à chaque dispositif de détection (4), ladite unité comprenant un dispositif de détermination (7a) d'une position d'activation du dispositif de détection (4) d'un ensemble lorsque le transpondeur (3) de l'ensemble est dans le cône d'émission/réception du moyen de communication dudit dispositif de détection, et un dispositif d'activation (7b) apte, en comparant la position du codeur (5) à la position d'activation, à activer le dispositif de détection (4) de l'ensemble pour mesurer le ou les paramètre(s).

## Description

L'invention concerne un système de détermination d'au moins un paramètre d'au moins un organe tournant par rapport à une structure fixe, un procédé de détermination d'au moins un tel paramètre ainsi qu'un véhicule automobile comprenant un tel système.

L'invention s'applique typiquement à la détermination d'au moins un paramètre, tel que la pression, la température, la déformation, l'usure, d'un pneu de véhicule automobile.

Pour ce faire, il est connu d'utiliser pour chaque pneu :
- un transpondeur qui est solidaire en rotation du pneu, ledit transpondeur étant apte à mesurer le ou les paramètre(s) ; et
- un dispositif de détection du ou des paramètre(s) issu(s) du transpondeur, ledit dispositif étant solidaire du châssis du véhicule et comprenant une antenne apte à émettre un signal d'excitation au transpondeur et à recevoir la ou les mesure(s).

Pour permettre la communication entre le transpondeur et le dispositif de détection, l'antenne de ce dernier est positionnée à proximité de la zone de déplacement du transpondeur, typiquement dans le passage de roue.

Ainsi, en activant le dispositif de détection, il est possible d'obtenir périodiquement la valeur du ou des paramètre(s) mesuré(s) par le transpondeur et de rendre disponible cette valeur à un système, par exemple de sécurité du véhicule, qui la contrôle et/ou l'utilise.

Un problème qui se pose concerne l'établissement d'une procédure d'activation du dispositif de détection qui permette d'obtenir une communication satisfaisante entre ledit dispositif et le transpondeur. En effet, l'antenne présentant un cône d'émission/réception donné, l'activation doit être réalisée lorsque le transpondeur se trouve dans ce cône.

Selon une première solution, on a proposé d'activer le dispositif de détection en continu, mais celle-ci présente plusieurs inconvénients. Tout d'abord, elle induit une consommation électrique importante, et en partie inutile lorsque le transpondeur ne se trouve pas dans le cône d'émission/réception. En outre, elle sollicite le transpondeur à chaque rotation, ce qui, dans certaines conditions de roulage, est inutile et, dans le cas d'un transpondeur actif, consomme l'énergie de sa batterie inutilement.

Pour tenter de limiter la consommation électrique, on a proposé selon une deuxième solution d'activer à fréquence fixe le dispositif de détection. Mais cette solution présente également plusieurs inconvénients. Tout d'abord, elle ne permet pas d'assurer que le transpondeur soit dans le cône d'émission/réception lorsque le dispositif de détection est activé. En particulier, pour une fréquence d'activation donnée, il existe des vitesses de rotation du transpondeur pour lesquelles cette condition n'est pas remplie, ce qui est incompatible avec une utilisation du ou des paramètre(s) dans une fonction de sécurité du véhicule. En outre, cette solution ne permet pas de garantir une détermination du ou des paramètre(s) à fréquence donnée, par exemple en fonction de conditions de fonctionnement du véhicule.

Pour tenter de résoudre les inconvénients de cette deuxième solution, on a proposé d'augmenter la taille de l'antenne, de sorte à augmenter le cône d'émission/réception correspondant. Mais, outre que cette possibilité ne peut que limiter ces inconvénients sans les résoudre complètement puisque qu'une zone d'ombre dans la communication est toujours présente, l'augmentation de la taille de l'antenne induit des contraintes d'intégration accrues dans le passage de roue ainsi qu'une puissance et donc une consommation électrique plus importante.

Pour résoudre l'ensemble de ces inconvénients, l'invention propose notamment un système de détermination qui permette de synchroniser la communication entre l'antenne et le transpondeur lorsque celui-ci est dans le cône d'émission/réception, de sorte à sécuriser la communication en optimisant la consommation électrique, et ce tout en pouvant adapter la fréquence de communication à des conditions de fonctionnement du véhicule.

A cet effet, et selon un premier aspect, l'invention propose un système de détermination d'au moins un paramètre d'au moins un organe tournant par rapport à une structure fixe, ledit système comprenant, pour chaque organe tournant, un ensemble comprenant :
- un transpondeur solidaire en rotation de l'organe tournant, ledit transpondeur étant apte à mesurer le ou les paramètre(s) à déterminer ;
- un codeur solidaire en rotation de l'organe tournant ;
- un capteur solidaire de la structure fixe, ledit capteur étant disposé en regard et à distance de lecture du codeur, ledit capteur comprenant un circuit électronique apte à délivrer un signal représentatif de la position angulaire du codeur par rapport à la structure fixe ;
- un dispositif de détection du ou des paramètre(s) issu(s) du transpondeur, ledit dispositif étant solidaire de la structure fixe et comprenant un moyen de communication apte à émettre un signal d'excitation au transpondeur et à recevoir la ou les mesure(s) ;
ledit système comprenant en outre :
une unité de synchronisation qui est connectée à chaque capteur et à chaque dispositif de détection, ladite unité comprenant un dispositif de détermination d'une position d'activation du dispositif de détection d'un ensemble lorsque le transpondeur de l'ensemble est dans le cône d'émission/réception du moyen de communication dudit dispositif de détection, et un dispositif d'activation apte, en comparant la position du codeur à la position d'activation, à activer le dispositif de détection de l'ensemble pour mesurer le ou les paramètre(s).

Dans un mode de réalisation, le dispositif d'activation comprend des moyens de recalage du signal de position du codeur par rapport à la position d'activation.

Selon un deuxième aspect, l'invention propose un procédé de détermination d'au moins un paramètre d'au moins un organe tournant par rapport à une structure fixe au moyen d'un tel système, comprenant une procédure initiale de détermination d'une position d'activation, puis lorsque la position du codeur est égale à ladite position d'activation, le dispositif d'activation active ou autorise l'activation du dispositif de détection.

Dans une réalisation particulière, lorsque le dispositif d'activation comprend des moyens de recalage, le procédé de détermination comprend une procédure initiale de détermination d'une position d'activation, après laquelle le signal de position du codeur est recalé par rapport à ladite position d'activation, pour, en fonction de la position recalée du codeur, permettre ou autoriser l'activation du dispositif de détection.

Selon un troisième aspect, l'invention propose un véhicule automobile comprenant un tel système, chaque ensemble étant disposé de sorte à déterminer au moins un paramètre d'un pneu dudit véhicule.

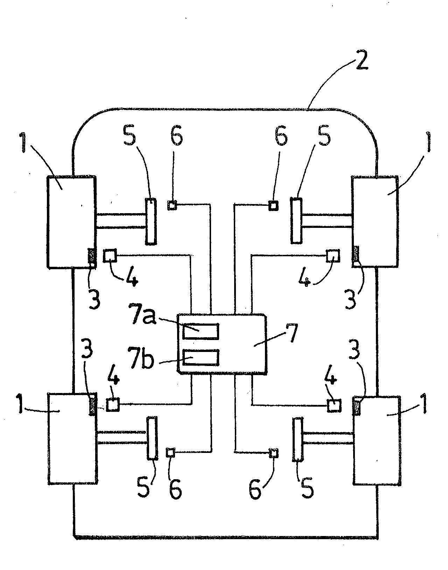

D'autres objets et avantages de l'invention apparaîtront au cours de la description qui suit, faite en référence au dessin annexé qui représente de façon schématique un véhicule comprenant un système de détermination selon l'invention.

L'invention concerne un système de détermination d'au moins un paramètre d'au moins un organe tournant 1 en rotation par rapport à une structure fixe 2. Selon le mode de réalisation décrit en relation avec la figure, ce système est destiné à la détermination d'au moins un paramètre d'au moins un pneu 1 d'un véhicule automobile. En particulier, le système permet la détermination de la pression, de la température, de la déformation et/ou de l'usure de tous les pneus 1 du véhicule.

Pour ce faire, le système comprend, pour chaque pneu 1, un ensemble comprenant un transpondeur 3 apte à mesurer le ou les paramètre(s) à déterminer, et un dispositif de détection 4 du ou des paramètre(s) issu(s) du transpondeur 3. Le transpondeur 3 est solidaire en rotation du pneu 1 et le dispositif de détection 4 est solidaire, au voisinage du transpondeur 3, du châssis 2 du véhicule. Selon d'autres applications, le transpondeur 3 peut être solidaire de la roue ou du roulement sur lequel la roue est montée.

Le système de détermination permet, en activant le dispositif de détection 4, d'obtenir périodiquement la valeur du ou des paramètre(s) mesuré(s) par le transpondeur 3 et de rendre disponible cette valeur à un système fixe par rapport au châssis 2, par exemple de sécurité du véhicule, qui la contrôle et/ou l'utilise. En particulier, la détermination automatique du ou des paramètre(s) peut permettre d'avertir le conducteur en cas d'anomalie. En outre, le ou les paramètre(s) peuvent être utilisés dans des systèmes d'aide à la conduite tels que l'anti-blocage des roues (ABS), le contrôle de la trajectoire (ESP) ou l'assistance électrique de la direction (DAE), de sorte à adapter l'action de ces systèmes en fonction de la valeur des paramètres déterminés.

Un ensemble transpondeur 3 - dispositif de détection 4 est connu de l'art antérieur :
- le dispositif de détection 4 comprenant un moyen de communication, par exemple sous la forme d'une antenne directionnelle, apte à émettre un signal d'excitation, par exemple RF, au transpondeur 3 et à recevoir la ou les mesure(s) ; et
- le transpondeur 3 pouvant être de type actif ou de type passif suivant qu'il est alimenté par une batterie propre afin d'effectuer la mesure et la communication ou que ces fonctions sont induites par le signal d'excitation issu du dispositif de détection 4. Pour la détermination de la pression du pneu 1, le transpondeur 3 peut être du type à ondes acoustiques de surface (SAW).

Dans le véhicule suivant l'invention, l'antenne est logée dans le passage de la roue sur laquelle est monté le pneu 1 et le transpondeur 3 est logé dans la valve du pneu 1. Ainsi la distance antenne - transpondeur 3 est réduite, ce qui permet d'optimiser la puissance électrique nécessaire à la communication des mesures entre le pneu 1 et le châssis 2. En variante, on peut également prévoir que le transpondeur 3 soit disposé dans la bande de roulement du pneu 1, notamment pour mesurer la déformation et l'usure de celui-ci.

L'ensemble comprend en outre un codeur 5 solidaire en rotation du pneu 1 et un capteur 6 solidaire du châssis 2 du véhicule. En particulier, le codeur 5 et/ou le capteur 6 peuvent être disposés au niveau du roulement de la roue tel que cela est par exemple décrit dans le document FR-2 700 588 issu de la demanderesse. Le codeur 5 peut en particulier être solidarisé en rotation à la bague tournante du roulement et le capteur 6 peut être associé à la bague fixe ou dissocié de celle-ci, pour être en regard et à distance de lecture du codeur 5.

Le codeur 5 a pour fonction de délivrer une information de position angulaire du pneu 1. Suivant une réalisation, le codeur 5 est formé d'un anneau magnétique comprenant sur sa surface une piste formée d'une succession de pôles Nord et Sud.

En regard et à distance de lecture de ce codeur 5, est prévu le capteur 6 qui comprend un circuit électronique apte à délivrer un signal représentatif de la position angulaire du codeur 5 par rapport au châssis 2.

Suivant une réalisation, le capteur 6 comprend au moins deux éléments sensibles positionnés en regard de la piste. Dans un exemple particulier, les éléments sensibles sont choisis dans le groupe comprenant les sondes à effet Hall, les magnétorésistances, les magnétorésistances géantes.

Le capteur 6 utilisé dans cette réalisation est apte à délivrer deux signaux électriques S1, S2 périodiques en quadrature par l'intermédiaire des éléments sensibles. Par ailleurs, le principe d'obtention des signaux S1 et S2 à partir d'une pluralité d'éléments sensibles alignés est par exemple décrit dans le document FR-2 792 403 issu de la demanderesse.

A partir des signaux S1, S2, le circuit électronique est apte à délivrer des signaux digitaux de position A, B carrés en quadrature qui sont représentatifs de la position angulaire du codeur mais également de sa vitesse de rotation ainsi que de son sens de rotation.

Suivant une réalisation, le circuit électronique comprend en outre un interpolateur, par exemple du type décrit dans le document FR-2 754 063 issu de la demanderesse, permettant d'augmenter la résolution des signaux de sortie. En particulier, une résolution de la position angulaire du codeur 5 inférieure à 1° peut être obtenue.

Le capteur 6 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 5 peut être formé d'une cible en métal ou en verre sur laquelle les pistes principale et top tour ont été gravées de sorte à former un motif optique analogue au motif magnétique multipolaire exposé ci-dessus, les éléments sensibles étant alors formés de détecteurs optiques.

Le circuit électronique comprend des moyens de comptage aptes à déterminer, à partir d'une position initiale, les variations de la position angulaire du codeur 5. Dans un exemple de réalisation, les moyens de comptage comprennent un registre dans lequel la valeur de la position angulaire est incrémentée ou décrémentée d'une valeur angulaire correspondant au nombre de fronts des signaux A et B qui sont détectés, la valeur initiale étant par exemple fixée à zéro lors de la mise en service du système. Ainsi, le dispositif de traitement permet de connaître la position relative du codeur 5 par rapport à la position initiale.

Outre le ou les ensemble(s), le système comprend une unité de synchronisation 7, sous la forme d'un calculateur, qui est connecté à chaque capteur 6 et à chaque dispositif de détection 4. L'unité comprend un dispositif de détermination 7a d'une position d'activation du dispositif de détection d'un ensemble lorsque le transpondeur 3 de l'ensemble est dans le cône d'émission/réception de l'antenne dudit dispositif de détection, et un dispositif d'activation 7b apte, en comparant la position du codeur à la position d'activation, à activer le dispositif de détection 4 pour mesurer le ou les paramètre(s).

L'unité 7 permet de synchroniser le passage du transpondeur 3 dans le cône avec l'activation du dispositif de détection 4 de sorte à optimiser la durée de vie de la batterie alimentant l'unité 7 et, le cas échéant, de la batterie alimentant le transpondeur 3 dans le cas où celui-ci est actif.

Selon une réalisation, le dispositif d'activation 7b comprend des moyens de recalage du signal de position du codeur 5 par rapport à la position d'activation, de sorte à délivrer un signal de position absolue dudit codeur 5 par rapport à ladite position, et donc un signal de position absolue du pneu 1 puisque le codeur 5 est solidaire en rotation de celui-ci.

Un procédé de détermination utilisant un système suivant l'invention, comprend une procédure initiale de détermination d'une position d'activation, puis lorsque la position du codeur 5 est égale à ladite position d'activation, le dispositif d'activation active ou autorise l'activation du dispositif de détection 4.

Lorsque le dispositif de d'activation 7b comprend des moyens de recalage, le procédé prévoit, après la détermination de la position d'activation, le recalage du signal de position du codeur 5 par rapport à ladite position d'activation, pour, en fonction de la position recalée du codeur, permettre ou autoriser l'activation du dispositif de détection 4.

Lorsque le dispositif d'activation 7b autorise l'activation, il peut être prévu de réaliser ladite activation à des périodes d'interrogation variables qui sont déterminées en fonction des conditions de fonctionnement du pneu 1. En particulier, ces conditions peuvent être fonction du ou des paramètre(s) mesuré(s) (pression, température), des conditions de roulage du véhicule telles que la vitesse ou l'état de la chaussée (condition de pluie ou de neige par exemple), du positionnement du pneu 1 (avant ou arrière).

Dans un exemple de réalisation, on peut définir au moins un seuil de vitesse pour le véhicule de sorte que :
- en dessous du seuil, l'activation soit réalisée à une fréquence fᵢ;
- au dessus du seuil, l'activation soit réalisée à une fréquence multiple de fᵢ.

On peut également décider de déterminer la pression des pneus 1 arrières plus fréquemment que celle des pneus avants.

Pour ce faire, l'unité de synchronisation 7 est également alimenté avec les paramètres pertinents et avec les conditions souhaitées, ledit dispositif comprenant des moyens de temporisation de l'activation lorsque celle-ci est autorisée.

Selon une réalisation, la procédure initiale de détermination peut être réalisée par activation à fréquence fixe, par exemple toutes les secondes, du dispositif de détection 4 et, lorsque le signal mesuré par le dispositif de détection 4 est satisfaisant, détermination et enregistrement dans le dispositif d'activation 7b de la position d'activation qui est égale à la position du codeur 5.

Cette procédure est déclenchée à chaque mise en service du système de détermination, avant la détermination du ou des paramètre(s) suivant l'invention.

Suivant une réalisation, on peut prévoir une procédure itérative d'optimisation de la position d'activation, ladite procédure pouvant être déclenchée en continu ou de façon périodique.

La procédure d'optimisation peut prévoir d'analyser la qualité du signal issu du dispositif de détection 4, par exemple son rapport signal sur bruit, le taux d'erreur de communication, la puissance communiquée. Si cette qualité est inférieure à un premier seuil, incrémenter et/ou décrémenter d'un pas donné, par exemple d'un degré, la position d'activation. De façon itérative, la procédure permet, en analysant la qualité du signal correspondant, d'incrémenter ou de décrémenter la position d'activation pour obtenir une position d'activation optimisée dans laquelle la qualité du signal est maximale. Cette position optimisée est utilisée ultérieurement en tant que nouvelle position d'activation.

Suivant une réalisation du procédé, un deuxième seuil de qualité du signal, inférieur au premier, est utilisé dans l'unité de synchronisation 7. On peut ainsi prévoir, si la qualité du signal est inférieure au deuxième seuil, de déclencher la procédure de détermination d'une position d'activation à la place de la procédure d'optimisation. En particulier, cette réalisation permet, en cas de coupure d'alimentation électrique du système lors de la détermination du ou des paramètre(s), de lancer une procédure de détermination pour recaler la synchronisation. En outre, si la procédure d'optimisation ne permet pas de converger vers une position optimisée, cette réalisation permet également de lancer une procédure de détermination en cours d'optimisation.

## Revendications

1. Système de détermination d'au moins un paramètre d'au moins un organe tournant (1) par rapport à une structure fixe (2), ledit système comprenant, pour chaque organe tournant (1), un ensemble comprenant :
- un transpondeur (3) solidaire en rotation de l'organe tournant (1), ledit transpondeur étant apte à mesurer le ou les paramètre(s) à déterminer ;
- un codeur (5) solidaire en rotation de l'organe tournant (1) ;
- un capteur (6) solidaire de la structure fixe (2), ledit capteur étant disposé en regard et à distance de lecture du codeur (5), ledit capteur comprenant un circuit électronique apte à délivrer un signal représentatif de la position angulaire du codeur (5) par rapport à la structure fixe (2) ;
- un dispositif de détection (4) du ou des paramètre(s) issu(s) du transpondeur (3), ledit dispositif étant solidaire de la structure fixe (2) et comprenant un moyen de communication apte à émettre un signal d'excitation au transpondeur (3) et à recevoir la ou les mesure(s) ;
ledit système comprenant en outre :
- une unité de synchronisation (7) qui est connectée à chaque capteur (6) et à chaque dispositif de détection (4), ladite unité comprenant un dispositif de détermination (7a) d'une position d'activation du dispositif de détection (4) d'un ensemble lorsque le transpondeur (3) de l'ensemble est dans le cône d'émission/réception du moyen de communication dudit dispositif de détection, et un dispositif d'activation (7b) apte, en comparant la position du codeur (5) à la position d'activation, à activer le dispositif de détection (4) de l'ensemble pour mesurer le ou les paramètre(s).

2. Système selon la revendication 1, **caractérisé en ce que** le dispositif d'activation (7b) comprend des moyens de recalage du signal de position du codeur (5) par rapport à la position d'activation.

3. Système selon la revendication 1 ou 2, **caractérisé en ce que** le codeur (5) est formé d'un anneau magnétique comprenant sur sa surface une piste formée d'une succession de pôles Nord et Sud.

4. Procédé de détermination d'au moins un paramètre d'au moins un organe tournant (1) par rapport à une structure fixe (2) au moyen d'un système selon la revendication 1, **caractérisé en ce qu'**il comprend une procédure initiale de détermination d'une position d'activation, puis lorsque la position du codeur (5) est égale à ladite position d'activation, le dispositif d'activation (7b) active ou autorise l'activation du dispositif de détection (4).

5. Procédé de détermination d'au moins un paramètre d'au moins un organe tournant (1) par rapport à une structure fixe (2) au moyen d'un système selon la revendication 2, **caractérisé en ce qu'**il comprend une procédure initiale de détermination d'une position d'activation, après laquelle le signal de position du codeur (5) est recalé par rapport à ladite position d'activation, pour, en fonction de la position recalée du codeur (5), permettre ou autoriser l'activation du dispositif de détection (4).

6. Procédé selon la revendication 4 ou 5, **caractérisé en ce que** la procédure initiale de détermination est réalisée par activation à fréquence fixe du dispositif de détection (4), et, lorsque le signal mesuré par ledit dispositif est satisfaisant, détermination de la position d'activation qui est égale à la position du codeur (5).

7. Procédé selon l'une quelconque des revendications 4 à 6, **caractérisé en ce qu'**il comprend une procédure itérative d'optimisation de la position d'activation dans laquelle la qualité du signal issu du dispositif de détection (4) est analysée, et, si la qualité est inférieure à un premier seuil, la position d'activation est incrémentée et/ou décrémentée d'un pas donné pour déterminer un nouvelle position optimisée qui est utilisée ultérieurement par le dispositif d'activation (7b) en tant que nouvelle position d'activation.

8. Procédé selon la revendication 7, dans lequel, si la qualité du signal est inférieure à un deuxième seuil qui est inférieur au premier seuil, la procédure de détermination d'une position d'activation est réalisée à la place de la procédure d'optimisation.

9. Procédé selon l'une quelconque des revendications 4 à 8, **caractérisé en ce que**, lorsque le dispositif d'activation (7b) autorise l'activation, celle-ci est réalisée à des périodes d'interrogation variables qui sont déterminées en fonction de conditions de fonctionnement de l'organe tournant (1).

10. Véhicule automobile comprenant un système selon l'une quelconque des revendications 1 à 3, chaque ensemble étant disposé de sorte à déterminer au moins un paramètre d'un pneu (1) dudit véhicule.

11. Véhicule selon la revendication 10, **caractérisé en ce que** le moyen de communication est logé dans le passage de la roue sur laquelle est monté le pneu (1) et **en ce que** le transpondeur (3) est logé dans la valve du pneu (1).
